# EUROPEAN PATENT SPECIFICATION

(11) **EP 4 347 398 B1**
(45) Date of publication and mention of the grant of the patent: **02.09.2026**
(21) Application number: 21736107.0
(22) Date of filing: 03.06.2021
(51) Int. Cl.: B64D 11/06

(54) **MULTI-PART LEG ASSEMBLY FOR A PASSENGER SEAT**
MEHRTEILIGE BEINANORDNUNG FÜR EINEN FAHRGASTSITZ
ENSEMBLE PIED À PLUSIEURS PIÈCES POUR SIÈGE PASSAGER

(43) Date of publication of application: 10.04.2024
(73) Proprietor: Safran Seats USA LLC, Gainesville, TX 76240 (US)
(72) Inventor: RAMARATHNAM, Gokul, Gainesville, Texas 76240 (US); TRANIER, Romain, Gainesville, Texas 76240 (US)
(74) Representative: Marconnet, Sébastien
(86) International application number: PCT/US2021/035737
(87) International publication number: WO 2022/256013

(56) References cited:
- EP-B1- 0 496 658
- EP-B1- 2 282 934
- WO-A1-2018/106767
- WO-A2-2014/058401
- DE-A1- 102008 006 695
- DE-B4- 102005 022 694
- DE-C2- 4 337 939
- FR-A1- 2 442 157
- GB-A- 2 232 584
- US-B1- 9 527 413

## Description

### FIELD OF THE INVENTION

The field of the invention relates to passenger seats, and, more particularly, to leg assemblies for passenger seats and to a method for assembling it.

### BACKGROUND

Passenger vehicles, such as aircraft, buses, trains, ships, and automobiles, often include one or more passenger seats in which passengers may be seated and otherwise use during travel. A passenger seat may include a leg assembly that connects the passenger seat to a base of the passenger vehicle, such as a floor, track, etc. Traditionally, such leg assemblies have been a single-piece construction. Such leg assemblies are difficult to optimize to different load cases for the passenger seat and generate significant material waste during manufacturing.

Document WO2018106767 describes a leg assembly for a passenger seat including a base member, a leg and an adjuster. The leg includes an upper end and a lower end. The upper end of the leg includes an aperture configured to receive a base frame tube, and the lower end is pivotally connected to the base member such that the leg is pivotable forward and aft from a base position. The adjuster is configured to pivotally position the leg relative to the base member.

Document DE102008006695 describes a movable attachment unit for a seat frame in an aircraft. A connecting element can be attached to both a seat structure and a floor fixing by means of bearings. The attachment is movably mounted. This allows the seat frame to move relative to the floor fixation, which movement does not require this fixation to be released from the floor.

Document US9527413 describes a seat assembly comprising a back frame portion and a lower frame portion. The lower frame portion has a pivotal connection with an energy absorbing mechanism mounted to the vehicle floor. The pivotal connection includes a stop mechanism to prevent seat assembly tilt during normal vehicle operation but allow tilt due to an explosion.

Document FR2442157 describes a seat support structure including a pair of spaced horizontal tubular members which extend beneath individual seating stations. The seat legs are identical to one another and have a bifurcated lower end which can accommodate a seat track locking fixture and supporting members that are fixed to the leg structure to furnish added rigidity thereto.

Document WO2014058401 describes a leg assembly for a seat comprising a forward leg, an aft leg and an intermediate support part that connects the legs between them. The intermediate support does the force transmission and force damping task via the intermediate support part.

Document EP2282934 describes passenger seats having seat dividers with support legs, which are held by spars running transversely to the seat direction and can be adjusted in simple fashion relative to each other in the longitudinal direction of the spars with no special accessories.

Document DE102005022694 describes a seat comprising a seat base and a backrest pivotably supported around an axis of rotation. A coupling device couples the movement of a part of the base between output and comfort positions. The device has an operating lever that is actuated by the movement of the backrest and/or the base. A coupling unit operates the base and/or the backrest between the positions.

### SUMMARY OF THE CLAIMED INVENTION

The present invention claims a leg assembly according to claim 1 and a method of assembling this leg assembly according to claim 12. Preferred embodiments of the leg assembly are claimed in the dependent claims 2-11.

### SUMMARY OF THE DISCLOSURE

The terms "invention," "the invention," "this invention" and "the present invention" used in this patent are intended to refer broadly to all of the subject matter of the patent claims below. Statements containing these terms should be understood not to limit the subject matter described herein or to limit the meaning or scope of the patent claims below. Embodiments of the invention covered by this patent are defined by the claims below, not this summary. This summary of the disclosure is a high-level overview of various aspects of the invention and introduces some of the concepts that are further described in the Detailed Description section below. This summary of the disclosure is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

According to certain embodiments, a leg assembly for a passenger seat includes a forward leg, an aft leg, and a central link that may connect the forward leg and the aft leg. The forward leg may include a forward connecting feature and may be adapted to receive a first base frame tube of the passenger seat. The aft leg may include an aft connecting feature and may be adapted to receive a second base frame tube of the passenger seat. The aft connecting feature may include a cavity defined in the aft leg. The central link may be pivotably connected to the forward connecting feature and to the aft connecting feature. The central link may extend at least partially into the cavity in the aft leg.

In some embodiments, the forward leg may include a forward side and an aft side opposite the forward side, and the forward connecting feature may extend outwards from the aft side of the forward leg. In certain embodiments, the forward connecting feature may include a slot, and the central link may extend at least partially into the slot of the forward leg. In various embodiments, the central link may extend along a 16 g load path of the leg assembly. In some embodiments, the forward leg may include a first material and the central link may include a second material that may be different from the first material. In certain embodiments, the first material may include an aluminum alloy, and the second material may include a magnesium alloy. In various embodiments, the aft leg may include the first material.

In some embodiments, the aft leg may include a forward side and an aft side opposite from the forward side, and the cavity may be included in the forward side of the aft leg. In certain embodiments, the aft side may include an arcuate profile such that a top end of the aft leg may be offset from a bottom end of the aft leg in a vertical and horizontal direction. In various embodiments, the leg assembly may additionally include a first connector pivotably connecting the central link with the forward connecting feature and may additionally include a second connector pivotably connecting the central link with the aft connecting feature. In some embodiments, the forward leg may include a forward base frame tube aperture that may be adapted to receive the first base frame tube of the passenger seat, and the aft leg may include an aft base frame tube aperture that may be adapted to receive the second base frame tube of the passenger seat.

In certain embodiments, the forward connecting feature may be positioned at a vertical position above a vertical position of the aft connecting feature such that the central link may be angled downwards from the forward leg to the aft leg. In various embodiments, a cross section of the central link may be different from a cross section of the forward leg.

In some embodiments, a passenger seat may include the leg assembly, a first base frame tube that may be supported by the forward leg, and a second base frame tube that may be supported by the aft leg. In certain embodiments, a method for assembling the leg assembly may include manufacturing the forward leg, manufacturing the central link, manufacturing the aft leg, and pivotably connecting the central link with the forward leg and the aft leg, such that manufacturing the forward leg or the central link may involve machining in two or fewer directions.

According to certain embodiments, a leg assembly for a passenger seat may include a forward leg, and aft leg, and a central link that may connect the forward leg and the aft leg. The forward leg may include a forward connecting feature, and the forward leg may be adapted to receive a first base frame tube of the passenger seat. The aft leg may include an aft connecting feature, and the aft leg may be adapted to receive a second base frame tube of the passenger seat. The central link may be pivotably connected to the forward connecting feature and may be pivotably connected to the aft connecting feature. The central link may extend along a 16 g load path of the leg assembly.

In some embodiments, the aft connecting feature may include a cavity defined in the aft leg, and the central link may extend at least partially into the cavity in the aft leg.

According to certain embodiments, a leg assembly for a passenger seat may include a forward leg, an aft leg, and a central link that may connect the forward leg and the aft leg. The forward leg may include a forward connecting feature, and the forward leg may be adapted to receive a first base frame tube of the passenger seat. The aft leg may include an aft connecting feature, and the aft leg may be adapted to receive a second base frame tube of the passenger seat. The aft connecting feature may be positioned at a vertical position that may be lower than a vertical position of the forward connecting feature. The central link may be pivotably connected to the forward connecting feature and may be pivotably connected to the aft connecting feature. The central link may extend in a downward direction from the forward leg to the aft leg.

In some embodiments, the aft connecting feature may include a cavity that may be characterized in the aft leg, and the central link may extend at least partially into the cavity in the aft leg. In certain embodiments, the forward leg may include a forward side and an aft side opposite the forward side, and the forward connecting feature may extend outwards from the aft side of the forward leg. The forward connecting feature may include a slot, and the central link may extend at least partially into the slot of the forward leg.

### BRIEF DESCRIPTION OF THE DRAWINGS

FIG. 1 is a perspective view of a generalized passenger seat, not according to the claimed invention.
FIG. 2 is a perspective view of a multi-part leg assembly, according to certain embodiments of the present invention.
FIG. 3 is an exploded view of the multi-part leg assembly of FIG. 2.
FIG. 4 is a perspective view of an aft leg of the multi-part leg assembly of FIG. 2.
FIG. 5 is a perspective view of a forward leg of the multi-part leg assembly of FIG. 2.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The described embodiments of the invention provide multi-part leg assemblies for passenger seats. While the multi-part leg assemblies are discussed for use with aircraft seats, they are by no means so limited. Rather, embodiments of the multi-part leg assemblies described herein may be used in passenger seats or other seats of any type or otherwise as desired.

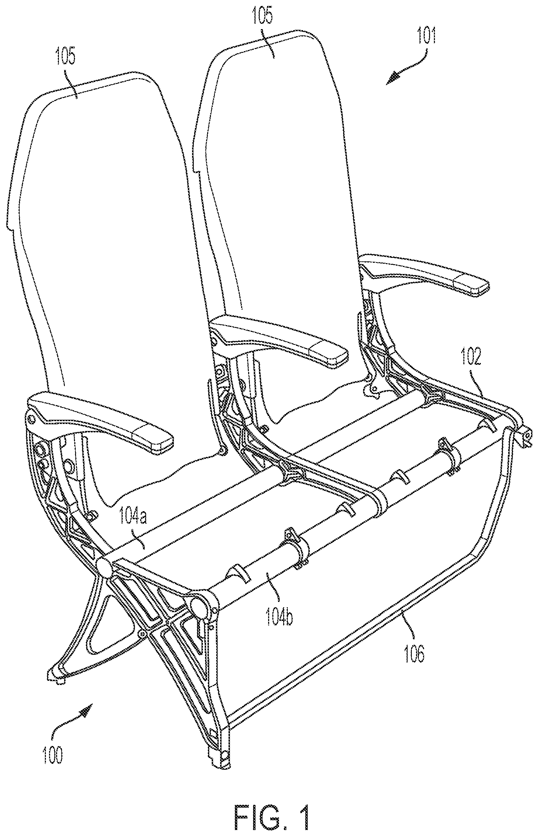

FIG. 1 is a perspective view of a generalized passenger seat 101 according to certain embodiments. The generalized passenger seat 101 may include one or more base frame assemblies 102 and one or more seat back assemblies 105 that may include various components that provide support for a passenger in the generalized passenger seat 101. Various components include, but are not limited to, one or more spreaders, arm rests, etc.

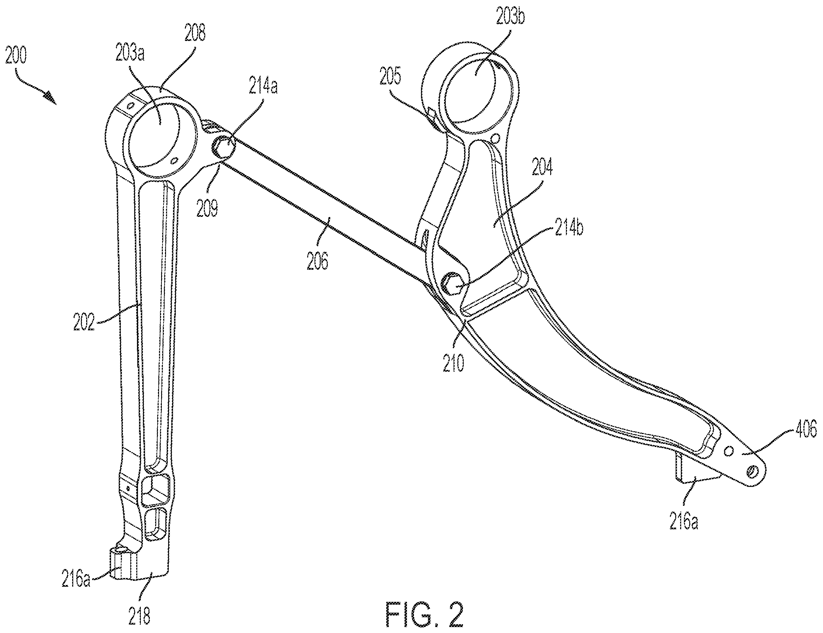

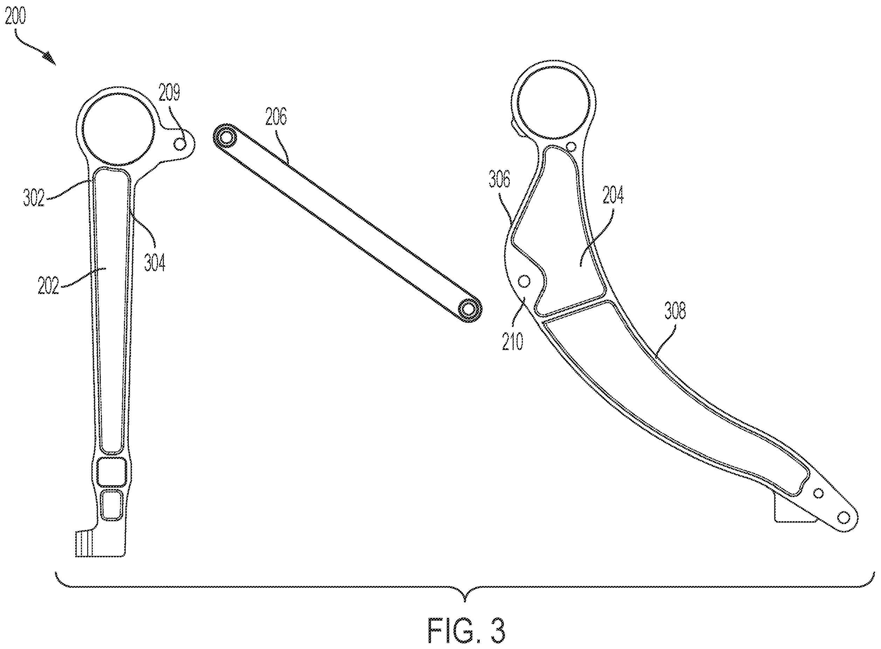

The generalized passenger seat 101 includes a leg assembly 100 that may mechanically affix or otherwise couple the generalized passenger seat 101 to a floor of a passenger vehicle such as an airplane or other suitable passenger vehicle. As illustrated, the leg assembly 100 is a single-part leg assembly such that the leg assembly 100 contains one piece. Additionally, as illustrated, couplings associated with the leg assembly 100 may be fixed. While the leg assembly 100 is illustrated as a single component in FIG. 1, in other embodiments, and as discussed in detail below with reference to FIGS. 2-5, the leg assembly 100 may be a multi-part assembly.

In certain embodiments, the passenger seat 101 may include at least one structural tube 104, and in certain embodiments, the generalized passenger seat 101 may include two or more structural tubes 104. Accordingly, while two structural tubes 104a-b are illustrated, the generalized passenger seat 101 may include any number of structural tubes 104 as desired, including a single structural tube 104 or more than two structural tubes 104. The structural tubes 104 may include uniform structural tubes, non-uniform structural tubes, or a combination thereof. Moreover, the particular structural tubes 104 illustrated should not be considered limiting, and other portions of the base frame assembly 102 may include a structural tube 104 as desired. A fully assembled generalized passenger seat 101 may include various cushioning, a bottom seat pan, in-flight entertainment equipment, tray tables, and/or other components as desire. Optionally, the generalized passenger seat 101 may include a baggage bar 106 that may be coupled to the leg assembly 100.

FIGS. 2-5 illustrate a leg assembly 200 according to various embodiments. In some examples, the multi-part leg assembly 200 may replace the leg assembly 100 as illustrated in the generalized passenger seat 101. Similar to the leg assembly 100, the leg assembly 200 may support and/or connect a passenger seat, such as the passenger seat 101, to a floor or other location on the passenger vehicle as desired. Compared to the single-component leg assembly 100, the leg assembly 200 is a multi-part assembly that includes at least two portions that are manufactured separately and connected together to form the leg assembly 200. In the embodiment of FIGS. 2-5, the leg assembly 200 includes three portions: a forward leg 202, an aft leg 204, and a central link 206 that connects the forward leg 202 and the aft leg 204. In other embodiments, the multi-part leg assembly 200 may include additional or fewer portions or pieces as desired.

The portions or components of the multi-part leg assembly 200 may be constructed from various suitable materials as desired, including but not limited to, stainless steel, aramid fibers, polycarbonate, polypropylene, aluminum, aluminum alloys, magnesium, magnesium alloys, other metallic materials or non-metallic materials, composite materials, combinations thereof, or other suitable materials. In certain embodiments, at least one portion of the multi-part leg assembly 200 may optionally be constructed from a material that is different from the material used for another portion of the multi-part leg assembly 200. As one non-limiting example, the forward leg 202 may be constructed from aluminum or an aluminum alloy, and the central link 206 may be constructed from magnesium or a magnesium alloy. In other embodiments, the components of the multi-part leg assembly 200 may be constructed from the same material. In certain embodiments, the forward leg 202 and the aft leg 204 may include the same or similar material, such as an aluminum alloy, and the central link 206 may include another material, such as the magnesium alloy, that is different from the material of the forward leg 202 and the aft leg 204.

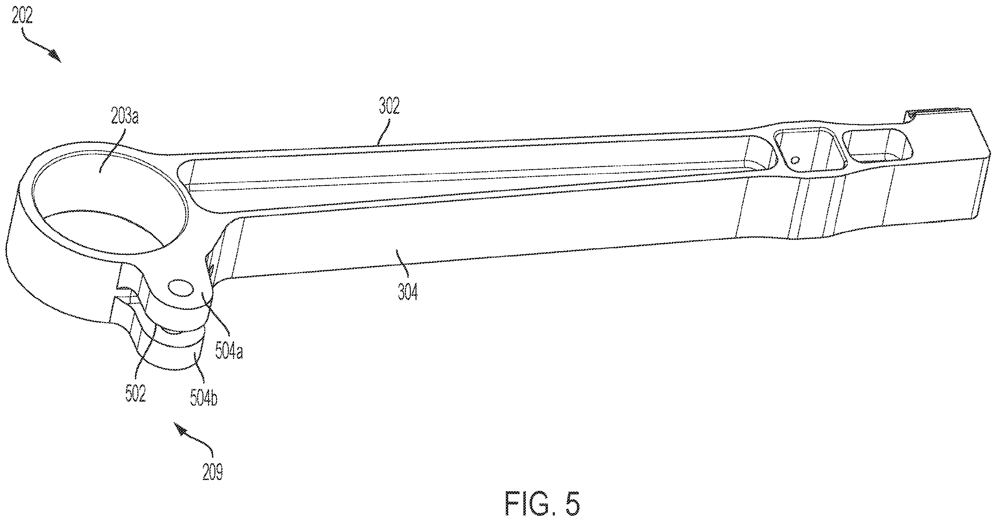

As best illustrated in FIGS. 2, 3, and 5, the forward leg 202 includes a forward side 302 and an aft side 304 opposite from the forward side 302. A forward connecting feature 209 may extend outward from the aft side 304 of the forward leg 202. In certain embodiments, the forward connecting feature 209 is monolithically or integrally formed with the forward leg 202. As illustrated in FIG. 2, the forward connecting feature 209 connects the forward leg 202 with the central link 206. In certain embodiments, the forward connecting feature 209 is proximate to a first end 208 of the forward leg 202, although it need not be in other embodiments. In the embodiment of FIGS. 2-5, and as best illustrated in FIG. 5, the forward connecting feature 209 include a slot 502 between tabs 504a-b. In this embodiment, the central link 206 may at least partially extend into the slot 502 defined by the tabs 504a-b, and a connector such as a first connector 214a may secure the central link 206 to the forward connecting feature 209. The central link is movable relative to the forward leg 202, although it need not be in other embodiments. According to the claimed invention, the central link 206 is pivotably couple to the forward connecting feature 209 via the first connector 214a. In other embodiments, the forward connecting feature 209 need not be the tabs 504a-b that define the slot 502, and may instead be other suitable devices, features, or components suitable for connecting the central link 206 to the forward leg 202.

According to the claimed invention, the forward leg 202 includes a first aperture 203a for receiving a first base-frame tube such as the structural tube 104. When the passenger seat is assembled, the first base-frame tube may be positioned within the first aperture 203a for mechanically coupling the forward leg 202 to other components of the passenger seat. The forward leg 202 optionally includes a base connecting feature 216a at a second end 218 of the forward leg 202, which may be utilized to attach the forward leg 202 to a floor or other location on the passenger vehicle (either directly or using intermediate structures or components as desired).

The aft leg 204 of the multi-part leg assembly 200 includes a forward side 306 and by an aft side 308 opposite from the forward side 306. An aft connecting feature 210 may be provided on or adjacent to the forward side 306 of the aft leg 204. In certain embodiments, the aft connecting feature 210 on the aft leg 204 is between a first end 404 and a second end 406 of the aft leg 204. In some embodiments, the aft connecting feature 210 may be at a vertical position that is lower than the forward connecting feature 209.

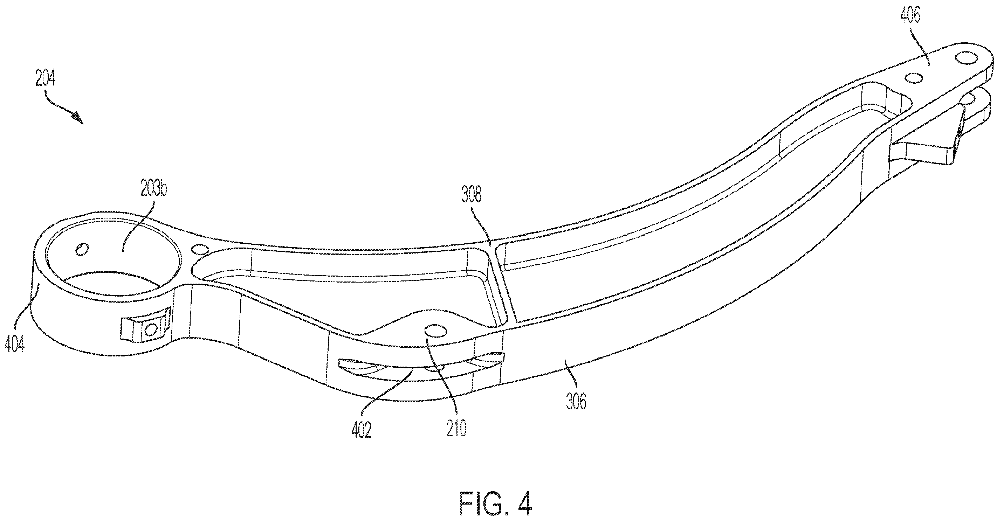

The aft connecting feature 210 may be monolithically or integrally formed with the aft leg 204. In the embodiment of FIGS. 2-5, and as best illustrated in FIG. 4, the aft connecting feature 210 includes a slot or cavity 402 defined in the forward side 306 of the aft leg 204. In these embodiments, the cavity 402 may extend at least partially into the aft leg 204. When the leg assembly 200 is assembled, and as illustrated in FIG. 2, the central link 206 extends at least partially into the cavity 402 and may be pivotably coupled to the aft connecting feature 210 via a second connector 214b or other suitable coupling mechanisms. In other embodiments not being part of the claimed invention, the aft connecting feature 201 need not be the cavity 402 extending into the aft leg 204, and may instead be other suitable devices, features, or components suitable for connecting the central link 206 to the aft leg 204.

In certain embodiments, similar to the forward leg 202, the aft leg 204 may include a second aperture 203b for receiving another base-frame tube. When the passenger seat is assembled, the second base-frame tube may be positioned within the second aperture 203b for mechanically coupling the aft leg 204 to a passenger seat. According to the claimed invention, the aft side 308 of the aft leg 204 includes a non-linear or arcuate profile such that the first end 404 of the aft leg 204 is offset from the second end 406 of the aft leg 204. In various embodiments, the first end 404 may be offset from the second end 406 in a vertical direction, in a horizontal direction, or a combination thereof. Optionally, the aft leg 204 may include a base connecting feature 216b, which may be at or proximate to the second end 406 of the aft leg 204. The base connecting features 216b may allow the aft leg 204 to be affixed to a floor of a passenger vehicle.

The central link 206 of the multi-part leg assembly 200 mechanically connects the forward leg 202 and the aft leg 204. In some embodiments, a cross-section of the central link 206 may be different from a cross-section of the forward leg 202, different from a cross-section of the aft leg 204, or than a combination thereof, although it need not in other embodiments. When the leg assembly 200 is assembled, the central link 206 extends from the forward connecting feature 209 of the forward leg 202 to aft connecting feature 210 of the aft leg 204. In some embodiments, and as best illustrated in FIG. 2, the central link 206 may extends downwards in an aft direction as the central link 206 extends from the forward leg 202 to the aft leg 204. In certain aspects, the central link 206 may extend along a 16 g load path of the multi-part leg assembly 200.

As mentioned, in some embodiments, the forward connecting feature 209 of the forward leg 202 may be higher than, or otherwise above, the aft connecting feature 210 of the aft leg 204. For example, the aft connecting feature 210 may be at a vertical position lower than a vertical position of the forward connecting feature 209. The central link 206 may be angled downward from the forward connecting feature 209 of the forward leg 202 to the aft connecting feature 210 of the aft leg 204. The central link 206 is pivotably coupled to the forward connecting feature 209 and to the aft connecting feature 210. The pivot coupling may use in this particular embodiment connectors 214a-b, which may include but are not limited to screws, bolts, rivets or other mechanical or chemical fasteners.

Each of the components of the multi-part leg assembly 200 (e.g., the forward leg 202, the aft leg 204, and the central link 206) may be formed via various manufacturing processes as desired. Suitable manufacturing processes include, but are not limited to, machining, forging, casting, printing, molding, combinations thereof, or other processes as desired. In some embodiments, the manufacturing process used to form one component may be different from the manufacturing process used to form another component. As one non-limiting example, the forward leg 202 or the aft leg 204 may be formed via forging, and the central link 206 may be formed via machining. In certain embodiments, at least one of the components of the multi-part leg assembly 200 may optionally only be manufactured in two directions (e.g., an x-direction and a y-direction), although in other embodiments they need not be.

Compared to a single-component leg assembly, the leg assembly 200 may have reduced manufacturing costs, reduced manufacturing waste, and/or improved optimization for loads that the leg assembly 200 may experience. As a non-limiting embodiment, each portion of the multi-part leg assembly 200 may be formed by a process and with a cross-sectional shape that may be, but does not have to be, separate and/or different from that of another portion of the multi-part leg assembly 200. As another non-limiting embodiment, each portion of the multi-part leg assembly 200 may have an optimized shape or profile to maximize a number of parts that can be obtained from a single source of material (e.g., maximize the number of parts that can be stamped, cast, etc. from a sheet of metal and/or otherwise formed), thereby reducing material waste during manufacturing.

Different arrangements of the components depicted in the drawings or described above, as well as components and steps not shown or described are possible. Similarly, some features and sub-combinations are useful and may be employed without reference to other features and sub-combinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

## Claims

1. A leg assembly (200) for a passenger seat (101) comprising:
a forward leg (202) comprising a forward connecting feature (209), wherein the forward leg (202) is adapted to receive a first base frame tube (104) of the passenger seat (101), wherein the forward leg (202) comprises a forward base frame tube aperture (203a) adapted to receive the first base frame tube (104) of the passenger seat (101),
an aft leg (204) comprising a forward side (306) and an aft side (308) opposite the forward side (306), the aft leg (204) comprising an aft connecting feature (210), wherein the aft leg (204) is adapted to receive a second base frame tube (104) of the passenger seat (101), wherein the aft leg (204) comprises an aft base frame tube aperture (203b) adapted to receive the second base frame tube (104) of the passenger seat (101), and
a central link (206) connecting the forward leg (202) and the aft leg (204),
the aft side (308) of the aft leg (204) includes a non-linear or arcuate profile such that a first end (404) of the aft leg (204) is offset from a second end (406) of the aft leg (204),
wherein the central link (206) is pivotably connected to the forward connecting feature (209) and pivotably connected to the aft connecting feature (210),
wherein the forward leg (202) comprises a forward side and an aft side opposite the forward side, and wherein the forward connecting feature (209) extends outwards from the aft side of the forward leg (202) and towards the aft leg (204), **characterized in that** the aft connecting feature (210) comprises a cavity (402) defined in the aft leg (204) and the central link (206) extends at least partially into the cavity (402) in the aft leg (204).

2. The leg assembly of claim 1, wherein the forward connecting feature (209) comprises a slot (502), and wherein the central link (206) extends at least partially into the slot (502) of the forward leg (202).

3. The leg assembly of claims 1 or 2, wherein the forward leg (202) comprises a first material and the central link (206) comprises a second material different from the first material.

4. The leg assembly of claim 3, wherein the first material comprises an aluminum alloy, and wherein the second material comprises a magnesium alloy.

5. The leg assembly of claim 3 or 4, wherein the aft leg (204) comprises the first material.

6. The leg assembly of any of the claims 1 to 5, wherein the cavity (402) is defined in the forward side of the aft leg (204).

7. The leg assembly of claim 6, wherein the aft side comprises an arcuate profile such that a top end of the aft leg (204) is offset from a bottom end of the aft leg (204) in a vertical and horizontal direction.

8. The leg assembly of any of the claims 1 to 7, further comprising a first connector (214a) pivotably connecting the central link (206) with the forward connecting feature (209) and a second connector (214b) pivotably connecting the central link (206) with the aft connecting feature (210).

9. The leg assembly of any of the claims 1 to 8, **characterized in that** the forward connecting feature (209) is at a vertical position above a vertical position of the aft connecting feature (210) such that the central link (206) is angled downwards from the forward leg (202) to the aft leg (204).

10. The leg assembly of any of the claims 1 to 9, **characterized in that** a cross section of the central link (206) is different from a cross section of the forward leg (202).

11. A passenger seat (101) comprising the leg assembly (200) of any of the claims 1 to 10, a first base frame tube (104) supported by the forward leg (202), and a second base frame tube (104) supported by the aft leg (204).

12. A method of assembling the leg assembly (200) of any of the claims 1 to 10, **characterized in that** the method comprises:
manufacturing the forward leg (202);
manufacturing the central link (206);
manufacturing the aft leg (204); and
pivotably connecting the central link (206) with the forward leg (202) and the aft leg (204),
wherein manufacturing the forward leg (202) or the central link (206) comprises machining in only two directions.

## Patentansprüche

1. Fußanordnung (200) für einen Passagiersitz (101), umfassend:
ein vorderer Fuß (202) mit einem vorderen Verbindungselement (209), wobei der vordere Fuß (202) für die Aufnahme eines ersten Grundrahmenrohrs (104) des Passagiersitzes (101) geeignet ist, wobei der vordere Fuß (202) eine vordere Grundrahmenrohröffnung (203a) aufweist, die für die Aufnahme des ersten Grundrahmenrohrs (104) des Passagiersitzes (101) geeignet ist,
ein hinterer Fuß (204) mit einer Vorderseite (306) und einer der Vorderseite (306) gegenüberliegenden Rückseite (308), wobei der hintere Fuß (204) ein hinteres Verbindungselement (210) aufweist und für die Aufnahme eines zweiten Grundrahmenrohrs (104) des Passagiersitzes (101) geeignet ist, wobei der hintere Fuß (204) eine hintere Öffnung (203b) für das Grundrahmenrohr aufweist, die für die Aufnahme des zweiten Grundrahmenrohrs (104) des Passagiersitzes (101) geeignet ist,
ein zentrales Verbindungsglied (206) zum Verbinden des vorderen Fußes (202) und des hinteren Fußes (204) miteinander,
wobei die Rückseite (308) des hinteren Fußes (204) mit einem nichtlinearen oder gewölbten Profil aufweist, so dass ein erstes Ende (404) des hinteren Fußes (204) gegenüber einem zweiten Ende (406) des hinteren Fußes (204) versetzt ist,
wobei das zentrale Verbindungsglied (206) schwenkbar mit dem vorderen Verbindungselement (209) und schwenkbar mit dem hinteren Verbindungselement (210) verbunden ist,
wobei der vordere Fuß (202) eine Vorderseite und eine der Vorderseite gegenüberliegende Rückseite umfasst, wobei das vordere Verbindungselement (209) sich von der Rückseite des vorderen Fußes (202) nach außen und in Richtung des hinteren Fußes (204) erstreckt, **dadurch gekennzeichnet, dass** das hintere Verbindungselement (210) einen im hinteren Fuß (204) ausgebildeten Hohlraum (402) aufweist, und das zentrale Verbindungsglied (206) sich zumindest teilweise in den Hohlraum (402) des hinteren Fußes (204) erstreckt.

2. Fußanordnung nach Anspruch 1, wobei das vordere Verbindungselement (209) einen Schlitz (502) aufweist, und wobei das zentrale Verbindungsglied (206) sich zumindest teilweise in den Schlitz (502) des vorderen Fußes (202) erstreckt.

3. Fußanordnung nach Anspruch 1 oder 2, wobei der vordere Fuß (202) aus einem ersten Material und das zentrale Verbindungsglied (206) aus einem zweiten, vom ersten Material verschiedenen Material besteht.

4. Fußanordnung nach Anspruch 3, wobei das erste Material eine Aluminiumlegierung und das zweite Material eine Magnesiumlegierung umfasst.

5. Fußanordnung nach Anspruch 3 oder 4, wobei der hintere Fuß (204) das erste Material umfasst.

6. Fußanordnung nach einem der Ansprüche 1 bis 5, wobei der Hohlraum (402) an der Vorderseite des hinteren Fußes (204) ausgebildet ist.

7. Fußanordnung nach Anspruch 6, wobei die Rückseite ein gewölbtes Profil aufweist, sodass das obere Ende des hinteren Fußes (204) gegenüber dem unteren Ende des hinteren Fußes (204) in vertikaler und horizontaler Richtung versetzt ist.

8. Fußanordnung nach einem der Ansprüche 1 bis 7, ferner umfassend einen ersten Verbinder (214a), der das zentrale Verbindungsglied (206) schwenkbar mit dem vorderen Verbindungselement (209) verbindet, und einen zweiten Verbinder (214b), der das zentrale Verbindungsglied (206) schwenkbar mit dem hinteren Verbindungselement (210) verbindet.

9. Fußanordnung nach einem der Ansprüche 1 bis 8, **dadurch gekennzeichnet, dass** sich das vordere Verbindungselement (209) in einer vertikalen Position oberhalb einer vertikalen Position des hinteren Verbindungselements (210) befindet, sodass das zentrale Verbindungsglied (206) vom vorderen Fuß (202) zum hinteren Fuß (204) nach unten geneigt ist.

10. Fußanordnung nach einem der Ansprüche 1 bis 9, **dadurch gekennzeichnet, dass** der Querschnitt des zentrale Verbindungsglieds (206) sich vom Querschnitt des Vorderfußes (202) unterscheidet.

11. Passagiersitz (101) mit der Fußanordnung (200) nach einem der Ansprüche 1 bis 10, einem ersten Grundrahmenrohr (104), das vom vorderen Fuß (202) getragen wird, und einem zweiten Grundrahmenrohr (104), das vom hinteren Fuß (204) getragen wird.

12. Verfahren zum Zusammenbau der Fußanordnung (200) nach einem der Ansprüche 1 bis 10, **dadurch gekennzeichnet, dass** das Verfahren umfasst:
Herstellen des vorderen Fußes (202);
Herstellen des zentralen Verbindungsglieds (206);
Herstellen des hinteren Fußes (204); und
Verbinden des zentralen Verbindungsglieds (206) schwenkbar mit dem vorderen Fuß (202) und dem hinteren Fuß (204), wobei die Herstellung des vorderen Fußes (202) oder des zentralen Verbindungsglieds (206) eine Bearbeitung in nur zwei Richtungen umfasst.

## Revendications

1. Ensemble de pieds (200) destiné à un siège de passager (101) comprenant :
un pied avant (202) comprenant un élément de liaison avant (209), le pied avant (202) étant adapté pour recevoir un premier tube de châssis de base (104) du siège de passager (101), le pied avant (202) comprenant une ouverture de tube de châssis de base avant (203a) adaptée pour recevoir le premier tube de châssis de base (104) du siège de passager (101),
un pied arrière (204) comprenant un côté avant (306) et un côté arrière (308) opposé au côté avant (306), le pied arrière (204) comprenant un élément de liaison arrière (210), le pied arrière (204) étant adapté pour recevoir un deuxième tube de châssis de base (104) du siège de passager (101), le pied arrière (204) comprenant une ouverture de tube de châssis de base arrière (203b) adaptée pour recevoir le deuxième tube de châssis de base (104) du siège de passager (101), et
un lien central (206) reliant le pied avant (202) et le pied arrière (204),
le côté arrière (308) du pied arrière (204) comprenant un profil non linéaire ou arqué de sorte qu'une première extrémité (404) du pied arrière (204) soit décalée par rapport à une deuxième extrémité (406) du pied arrière (204),
le lien central (206) étant relié de manière pivotante à l'élément de liaison avant (209) et relié de manière pivotante à l'élément de liaison arrière (210),
le pied avant (202) comprenant un côté avant et un côté arrière opposé au côté avant, et l'élément de liaison avant (209) s'étendant vers l'extérieur depuis le côté arrière du pied avant (202) et vers le pied arrière (204), **caractérisé en ce que** l'élément de liaison arrière (210) comporte une cavité (402) définie dans le pied arrière (204) et **en ce que** le lien central (206) s'étend au moins partiellement jusque dans la cavité (402) du pied arrière (204).

2. Ensemble de pieds selon la revendication 1, dans lequel l'élément de liaison avant (209) comporte une fente (502), et le lien central (206) s'étend au moins partiellement jusque dans la fente (502) du pied avant (202).

3. Ensemble de pieds selon les revendications 1 ou 2, dans lequel le pied avant (202) comporte une première matière et le lien central (206) comporte une deuxième matière différente de la première matière.

4. Ensemble de pieds selon la revendication 3, dans lequel la première matière comporte un alliage d'aluminium et la deuxième matière comporte un alliage de magnésium.

5. Ensemble de pieds selon la revendication 3 ou 4, dans lequel le pied arrière (204) comporte la première matière.

6. Ensemble de pieds selon l'une quelconque des revendications 1 à 5, dans lequel la cavité (402) est définie dans le côté avant du pied arrière (204).

7. Ensemble de pieds selon la revendication 6, dans lequel le côté arrière comporte un profil arqué de sorte qu'une extrémité supérieure du pied arrière (204) soit décalée par rapport à une extrémité inférieure du pied arrière (204) dans une direction verticale et horizontale.

8. Ensemble de pieds de l'une quelconque des revendications 1 à 7, comprenant en outre un premier connecteur (214a) reliant de manière pivotante le lien central (206) à l'élément de liaison avant (209) et un deuxième connecteur (214b) reliant de manière pivotante le lien central (206) à l'élément de liaison arrière (210).

9. Ensemble de pieds selon l'une quelconque des revendications 1 à 8, **caractérisé en ce que** l'élément de liaison avant (209) est dans une position verticale au-dessus d'une position verticale de l'élément de liaison arrière (210) de sorte que le lien central (206) est incliné vers le bas depuis le pied avant (202) vers le pied arrière (204).

10. Ensemble de pieds selon l'une quelconque des revendications 1 à 9, **caractérisé en ce qu'**une section transversale du lien central (206) est différente d'une section transversale du pied avant (202).

11. Siège de passager (101) comprenant l'ensemble de pieds (200) selon l'une quelconque des revendications 1 à 10, un premier tube de châssis de base (104) supporté par le pied avant (202) et un deuxième tube de châssis de base (104) supporté par le pied arrière (204).

12. Procédé d'assemblage de l'ensemble de pieds (200) selon l'une quelconque des revendications 1 à 10, **caractérisé en ce que** le procédé comprend les étapes suivantes :
réaliser le pied avant (202) ;
réaliser le lien central (206) ;
réaliser le pied arrière (204) ; et
relier de manière pivotante le lien central (206) au pied avant (202) et au pied arrière (204), la réalisation du pied avant (202) ou du lien central (206) comprenant un usinage dans seulement deux directions.
